# EUROPÄISCHE PATENTSCHRIFT

(11) **EP 2 664 437 B1**
(45) Veröffentlichungstag und Bekanntmachung des Hinweises auf die Patenterteilung: **06.07.2016**
(21) Anmeldenummer: 13168618.0
(22) Anmeldetag: 21.05.2013
(51) Int. Cl.: B29C 45/26

(54) **Werkzeug und Verfahren zur Herstellung von bindenahtoptimierten Formteilen**
Tool and method for manufacturing moulded parts with optimised knit lines
Outil et procédé de fabrication de pièces de formage optimisées en termes de ligne de soudure

(30) Priorität: 18.05.2012 DE 102012104324
(43) Veröffentlichungstag der Anmeldung: 20.11.2013
(73) Patentinhaber: Gealan Formteile GmbH, 95145 Oberkotzau (DE)
(72) Erfinder: Saunus, Christian, 08223 Grünbach (DE); Pöhlmann, Thomas, 95233 Helmbrechts (DE)
(74) Vertreter: Fleuchaus, Michael A.

(56) Entgegenhaltungen:
- EP-A1- 0 466 181
- EP-A1- 0 573 232
- EP-A1- 1 092 521
- EP-A2- 0 693 736
- WO-A2-2009/061200
- JP-A- 2005 007 853
- US-A- 5 538 413
- HEUEL O: 'RATIONELLE ENTFORMUNG VON SPRITZGUSSTEILEN MIT AUSWERFER-NORMALIEN' KUNSTSTOFFBERATER Bd. 31, Nr. 4, 01 April 1986, Seiten 27 - 29, XP001176481 ISSN: 0172-6374

## Beschreibung

Die vorliegende Erfindung betrifft Vorrichtungen und Verfahren zur Herstellung von Formteilen. Insbesondere betrifft die vorliegende Erfindung Vorrichtungen und Verfahren zur Herstellung von Formteilen mit verbesserten Bindenahteigenschaften.

Werkzeuge und Verfahren zur Herstellung von Formteilen, insbesondere im Spritzguss sind im Stand der Technik hinreichend bekannt. Solche Werkzeuge bestehen üblicherweise aus mehreren Teilen, wie beispielsweise einem düsenseitigen Werkzeugaufbau und einem auswerferseitigen oder aufspannseitigen Werkzeugaufbau.

Während des Gussprozesses werden die Werkzeugteile zusammengesetzt oder geschlossen, beispielsweise durch gegeneinander fahren zweier Werkzeughälften, und in diesem Zustand gehalten. Die Werkzeugteile sind dabei so ausgestaltet, dass innerhalb des zusammengesetzten oder geschlossenen Werkzeugs eine Formteilkavität definiert ist, welche einen von Außen zugänglichen Anguss aufweist.

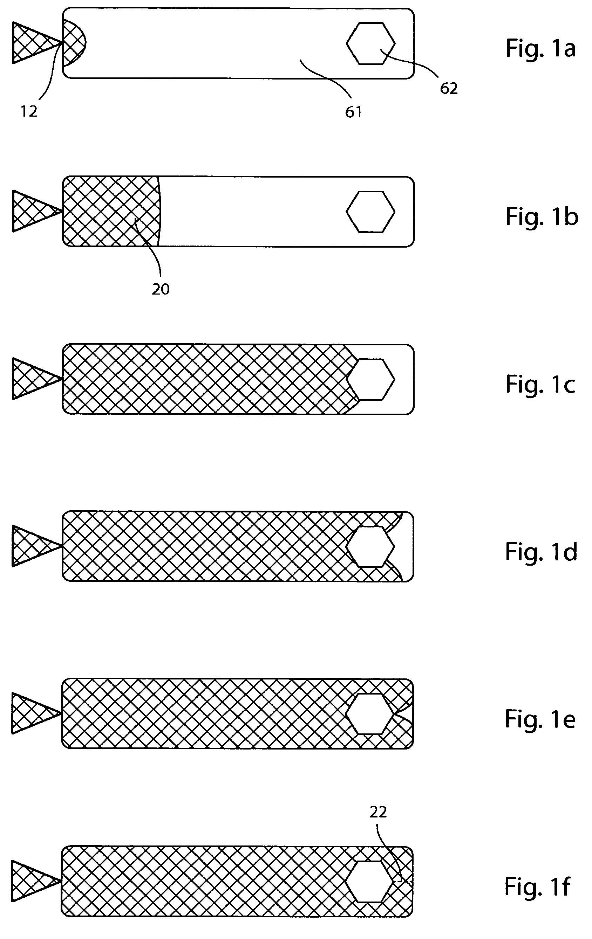

Wie in Fig. 1a-f schematisch gezeigt ist erfolgt in der Füllphase die Befüllung der innerhalb des Werkzeugs vorhandene Formteilkavität 61 mit Materialschmelze 20 durch den Anguss 12. Im Falle des Spritzgusses wird Kunststoffschmelze aus wenigstens einem düsenseitig angeschlossenen Spritzgussaggregat in die Formteilkavität 61 unter hohem Druck eingespritzt, wobei in Fig. 1a-f die Formteilkavität 61 gezeigt ist, die zudem einen Kern 62 aufweist, welcher im Rahmen der Füllphase umströmt wird, so dass hierdurch eine Durchführung im fertigen Formteil erzeugt wird.

Nach dem Erstarren der Schmelze innerhalb der Formteilkavität, beispielsweise durch Abkühlung der Schmelze wird das Werkzeug geöffnet, beispielsweise durch Wegfahren des auswerferseitigen Werkzeugaufbaus vom Düsenseitigen Werkzeugaufbau und das Formteil kann entnommen werden oder ausfallen (Entformung). Hiernach kann der Prozess von neuem beginnen.

Im Rahmen der nachfolgenden Beschreibung wird zur Erläuterung der vorliegenden Erfindung wie auch zur weiteren Erläuterung des Standes der Technik fortan nur noch auf Spritzgussverfahren und die Verhältnisse im Rahmen dieses spezifischen Herstellungsprozesses Bezug genommen. Gleichwohl sind sowohl die Nachteile des Standes der Technik als auch die Problemstellung und die erfinderische Lösung gleichermaßen anwendbar auf andere Gussverfahren, wie beispielsweise Metall-Druckguss und dergleichen.

Bei der Herstellung von Formteilen welche wenigstens eine Durchführung aufweisen, also einen von Material vollständig umschlossenen, freibleibenden Bereich, wie beispielsweise ein innenliegendes Loch, ist im Werkzeug innerhalb der Formteilkavität 61 ein Kern 62 vorhanden, der die im fertigen Formteil vorhandene Durchführung definiert (vgl. Fig. 1a-f).

Während der Füllphase wird dieser Kern 62 von der Schmelze 20 umströmt, d.h. es bildet sich beiderseits des Kerns ein Schmelzefluss aus (vgl. Fig. 1c und 1d) der sich hinter dem Kern wieder vereinigt (vgl. Fig. 1e). Die Flussfront der Schmelze teilt sich also am Kern in zwei getrennte Flussfronten auf, die beiderseits des Kerns an diesem vorbei "laufen" - gegebenenfalls mit unterschiedlichen Geschwindigkeiten, je nach lokaler Formteildicke, durchströmtem Volumen und ähnlichen Gegebenheiten - und hiernach wieder aufeinander treffen.

Im Bereich der aufeinander treffenden Flussfronten laufen diese Flussfronten "aufeinander ab" wodurch eine Nahtbildung erfolgt, die sogenannte Bindenaht 22 (vgl. Fig. 1f). Durch das "aufeinander Ablaufen" der Flussfronten im Bereich der Bindenaht kommt es hier zu einer Schmelzeausbreitung im wesentlichen parallel zur Naht 22, wodurch die Materialdurchmischung der Schmelze über die Nahtgrenze hinweg stark verringert oder sogar vollständig unterbunden wird.

Bindenähte stellen bei allen kräftebeanspruchten Formteilen einen problematischen Bereich dar, da hier die Formteilfestigkeit aufgrund der nicht oder nur sehr schwach erfolgten Materialdurchmischung inhärent verringert ist. Insbesondere ist dies auch der Fall bei Formteilen, welche zur Materialarmierung mit Faserbefülltem Kunststoff gespritzt werden, da es durch die sich parallel zur Bindenaht ausbreitende Schmelze auch zu einer korrespondierenden Faserorientierung in diesem Bereich kommt, was wiederum eine Formteilschwächung an der Bindenaht mit sich bringt.

Zur Vermeidung der Bildung geschwächter Bindenähte wurden verschiedene Lösungsansätze verfolgt, wie beispielsweise das Gegentakt-Spritzgießen, das Intrudieren, oder die Anbringung von Überlauf-Bohnen, wobei keiner dieser Ansätze eine optimale Lösung darstellt, da in allen Fällen die Wirtschaftlichkeit des Herstellungsprozesses durch die Erhöhung der Komplexität desselben und insbesondere der Gerätschaften, oder aber durch einen signifikant erhöhten Rohmaterialbedarf belastet wird. Darüber hinaus sind diese Verfahren für eine Vielzahl von Formteilgeometrien nicht einsetzbar, da sie an vielen Stellen eines Formteils nicht umsetzbar sind.

EP573232 und US 5583413 offenbaren Werkzeuge nach dem Oberbegriff des Anspruchs 1.

Es ist daher Aufgabe der vorliegenden Erfindung, ein Werkzeug und eine Verfahren zur Herstellung von Formteilen bereitzustellen, welches die Nachteile des Standes der Technik zumindest teilweise überwindet und insbesondere die Herstellung von Formteilen mit verbesserten Bindenahteigenschaften erlaubt.

Diese Aufgabe wird durch ein Werkzeug gemäß Anspruch 1 gelöst sowie ein Verfahren gemäß Anspruch 7. Bevorzugte Ausführungsformen sind Gegenstand der jeweiligen abhängigen Ansprüche.

Danach weist ein Werkzeug zur Herstellung von Formteilen mit wenigstens einer Durchführung wenigstens eine erste und eine korrespondierende zweite Werkzeughälfte auf, welche im zusammengesetzten Zustand eine innenliegende Formteilkavität definieren und die zur Herstellung eines Formteils in einem Gussverfahren dient, vorzugsweise einem Spritzgussverfahren, wobei innerhalb der Formteilkavität wenigstens ein Kern angeordnet ist, der die Durchführung des Formteils definiert. Das Werkzeug weist weiter wenigstens einen Anguss für die Formteilkavität auf und wenigstens eine mit der Formteilkavität flussverbundene Fehlkavität.

Bei der Fehlkavität handelt es sich um eine Kavität, die von der eigentlich erforderlichen Formteilgeometrie - also hinsichtlich Funktion oder ästhetisch bedingter Geometrie des Formteils - im wesentlichen unabhängig ist und zumeist erst nach Festlegung dieser Bedarfsgeometrie des Formteils definiert wird. Die Fehlkavität hat also auf die zugrunde liegende Funktionalität bzw. ästhetische Form des Formteils zunächst keinen Einfluss und wird zumeist erst nach abgeschlossener Entwicklung der benötigten Formteilgeometrie an das Formteil "ankonstruiert", um die erfindungsgemäßen Lehre zu verwirklichen.

Erfindungsgemäß ist die Fehlkavität in der Nähe des Kerns angeordnet, das heißt, die Fluid- oder Flussverbindung zur Formteilkavität ist in der Nähe des Kerns vorgesehen und weist eine allgemein zylindrische Geometrie auf mit einer über die Höhe des Zylinders im wesentlichen gleich bleibenden Querschnittsfläche, die sich - bei im wesentlichen gleichbleibendem Querschnitt - bis in die Formteilkavität hinein erstreckt. Die Längsachse der Fehlkavität ist unter einem vorgegebenen Winkel α zur lokalen Oberflächenlage der Formteilkavität angeordnet.

Darüber hinaus weist das erfindungsgemäße Werkzeug wenigstens einen durch ein Vorschubaggregat im wesentlichen linearverschieblichen Druckstempel auf, wobei die Verschiebungslinie des Druckstempels im wesentlichen parallel und bevorzugt konzentrisch zur Längsachse der Fehlkavität verläuft, so dass ein Vorschub des Druckstempels zu einer Reduzierung des freien Volumens der Fehlkavität führt.

Unter einem im wesentlichen gleich bleibenden Querschnitt im Sinne der vorliegenden Erfindung sind gleichermaßen konstante Querschnitte zu verstehen, wie auch Querschnitte, die sich aufgrund technischer Voraussetzungen, wie beispielsweise der Notwendigkeit einer Entformbarkeit, in geringem Maße verändern. So sind beispielsweise im Spritzguss entformungsschrägen von etwa 2 bis 3° üblich, was über die Höhe des allgemeinen Zylinders der Fehlkavität zwar zu messbaren Veränderungen des Querschnitts führt, jedoch im Rahmen der Wahrnehmung des Benutzers üblicherweise als konstanter Querschnitt angesehen wird.

Mit dem Werkzeug gemäß der vorliegenden Erfindung ist es während eines gewissen Zeitraums nach Abschluss der Füllphase möglich, nämlich so lange, wie es noch nicht zu einem Erstarren der Schmelze bis in die Seele des Formteils und der Fehlkavität hinein gekommen ist, den Druckstempel in die Fehlkavität einzuschieben und dadurch eine Verdrängung von noch plastischem Schmelzematerial aus der Fehlkavität heraus und hinein in die Formteilkavität zu erzeugen. Zwar kommt es auch schon während der Füllphase zu einem Erstarren der Schmelze im Kontaktbereich mit den Werkzeugwandung, also den Wandungen der Formteilkavität und auch der Fehlkavität, doch bleibt auch nach Abschluss der Füllphase die Seele des Formteils bzw. des Fehlkörpers aufgrund der während der Füllphase auftretenden Friktionswärme beim Schmelzefluss für eine gewisse Zeit lang plastisch.

Während dieses Zeitraums ist es gemäß der vorliegenden Erfindung vorgesehen, mit dem Druckstempel die Zylinderdeckfläche der Fehlkavität zu durchstoßen (ähnlich wie im Falle einer Stanzung) und den Druckstempel in die Fehlkavität einzufahren, und so eine Verdrängung der in der Seele der Fehlkavität ebenfalls noch plastischen Schmelze bis in die Seele des Formteils hinein vorzunehmen. Dadurch kommt es nach Abschluss der Füllphase zu einer weiteren Schmelzeverschiebung in der Seele des Formteils und somit auch zu einer Materialdurchmischung im Bereich der Bindenaht. Hierdurch wird die Festigkeit der Bindenaht beträchtlich erhöht; zum Teil sind ähnlich Festigkeitswerte im Bereich der Bindenaht des Formteils erzielbar wie in anderen Formteilbereichen, in denen ein homogener Schmelzefluss stattgefunden hat.

Um die erfinderische Wirkung der Materialverschiebung der Schmelze im Bereich der Bindenaht zu erzielen ist es für die Anordnung der Fehlkavität "in der Nähe" des Kerns und/oder der Bindenaht - wobei eine Bindenahtbildung im Bereich eines Kerns zumindest immer beginnt oder endet - erforderlich dass eine kontinuierliche "Schmelzeverbindung" oder auch "plastische Verbindung" zwischen der Fehlkavität und der Bindenaht besteht, d.h. in dem Bereich zwischen der Fehlkavität, aus der durch den Druckstempel Schmelze in die Seele des Formteils hinein gepresst wird, und der Bindenaht muss fließfähiges und mithin nicht erstarrtes Material vorliegen.

Insoweit ist auch der Begriff "in der Nähe" gemäß der vorliegenden Erfindung in Bezug auf die Anordnung der Fehlkavität zu verstehen, nämlich dass die Fehlkavität dergestalt "in der Nähe" des Kerns und/oder der Bindenaht angeordnet ist, dass im Rahmen der Prozess- und Formteilparameter zwischen den Beiden nach Abschluss der Füllphase noch ein ausreichend großer Schmelzefluss möglich ist. Diese Bedingung lässt sich unter Berücksichtigung der Prozessparameter und der Formteileigenschaften bzw. -parameter durch gängige Simulationsprogramme noch vor der Werkzeugherstellung bestimmen, so dass die genaue Position an der die Fehlkavität ankonstruiert wird bereits vor der Werkzeugherstellung ermittelt werden kann.

Bei einer Ausführungsform der vorliegenden Erfindung ist die Fehlkavität an einem Bereich der Formteilkavität angeordnet, welcher, mit Bezug auf den Kern, zu wenigstens einem Anguss der Formteilkavität abgewandt ist. Hierdurch ist sicher gestellt, dass sich die Fehlkavität in unmittelbarer Nähe zu dem Bereich befindet, in dem beim Spritzvorgang eine Bindenahtentstehung erfolgen wird, da ein Zusammenfluss der geteilten Flussfronten zumeist an einer dem Anguss abgewandten Seite des Kerns erfolgen wird. Eine Anordnung der Fehlkavität in diesem Bereich, also auch nahe der Bindenaht, führt somit zu einer besonders ausgeprägten Materialverschiebung der Schmelze an der Nahtstelle und damit auch zu einer verbesserten Festigkeit der Bindenaht.

Bei einer weiteren Ausführungsform der Erfindung gilt 70° < α < 80°, vorzugsweise 80° < α < 85°, bevorzugt 85° < α < 90° und besonders bevorzugt α ≈ 90°. Im Regelfall wird eine normale Erstreckung der Zylinderhöhe der Fehlkavität in Bezug auf die Oberfläche des Formteils bzw. der Formteilkavität bevorzugt sein, da hierdurch eine im wesentlichen radialsymmetrische Materialverschiebung der Schmelze während des Verdrängungsprozesses, wenn also der Druckstempel in die Fehlkavität eingepresst wird, erfolgt. Auf diese Weise erfolgt eine im wesentlichen flächig gleichmäßige innere Schmelzeverschiebung im Formteil. Soll hingegen eine konkrete Richtung der Schmelzeverschiebung bevorzugt sein, so kann die Fehlkavität auch "schräg" in Bezug auf die Oberfläche des Formteils bzw. der Formteilkavität angeordnet sein, also unter einem Winkel α ≠ 90°.

Bei einer weiteren Ausführungsform der Erfindung ist der Vorschub des Druckstempels geringer oder maximal gleich der Höhe des Zylinders der Fehlkavität, vorzugsweise 50 - 70% der Höhe des Zylinders der Fehlkavität, weiter vorzugsweise 70 - 90% der Höhe des Zylinders der Fehlkavität, bevorzugt 90 - 95% der Höhe des Zylinders der Fehlkavität, und besonders bevorzugt 95 - 100% der Höhe des Zylinders der Fehlkavität. Obgleich es bevorzugt sein kann, das Volumen der Fehlkavität bzw. der hieraus verdrängten Schmelze bei möglichst geringem Querschnitt der Fehlkavität zu maximieren, so dass als bevorzugte Form der Fehlkavität auch eine kreiszylindrische Form anzusehen ist, und damit ein Vorschub des Druckstempels über die gesamte Höhe der Fehlkavität erfolgen sollte, kann auch ein verringerter Hub des Druckstempels erwünscht sein, beispielsweise bei einer Druckgesteuerten Materialverdrängung oder aber, wenn beispielsweise sicher zu stellen ist dass im Bereich der Fehlkavität, nachdem der Druckstempel eingefahren wurde und das Formteil ausgehärtet ist eine Schwächung des Formteils keinesfalls erfolgt.

Bevorzugt ist der Querschnitt der Fehlkavität größer oder gleich der lokalen Dicke der Formteilkavität im Bereich der Fehlkavität, wodurch erzielt wird, dass sich das Material sowohl in der Seele des Formteils als auch in der des Fehlkörpers (also des durch die Fehlkavität bedingten Körpers am Spritzling) zum Zeitpunkt des Einfahrens des Druckstempels noch im plastischen Zustand befinden. Um besonders große Schmelzematerialverschiebungen in der Formteilseele hervorzurufen kann es darüber hinaus von Vorteil sein, den Querschnitt der Fehlkavität deutlich über der lokalen Formteildicke zu dimensionieren, so dass beispielsweise der Querschnitt der Fehlkavität das 8 bis 10-Fache der lokalen Dicke der Formteilkavität im Bereich der Fehlkavität beträgt, weiter vorzugsweise das 5 bis 8-Fache der lokalen Dicke der Formteilkavität beträgt, weiter vorzugsweise das 3 bis 5-Fache der lokalen Dicke der Formteilkavität beträgt, und zumindest das 1 bis 3-Fache der Dicke der Formteilkavität im Bereich der Fehlkavität beträgt.

Bevorzugt ist zur Optimierung des Verhältnisses aus Fehlkavitätsvolumen und -querschnitt die Geometrie der Fehlkavität kreiszylinderförmig, wobei jedwede andere Geometrie anwendungsspezifisch ebenfalls bevorzugt sein kann. Gleichermaßen ist bei einer bevorzugten ausführungsform der Druckstempel allgemein zylindrisch ausgeführt, bevorzugt korrespondierend zur Geometrie der Fehlkavität oder aber, alternativ und ebenfalls bevorzugt kegelstumpfförmig. Weiterhin kann der Druckstempel wenigstens einen stufenförmigen Absatz aufweisen, an welchem sich die Querschnittsfläche des Druckstempels im Wesentlichen unstetig verringert.

Derartige Ausführungsformen erlauben es, die sich durch die Fehlkavität nach dem Einfahren des Druckstempels ergebende Geometrie am fertigen Spritzling beispielsweise zur Befestigung von Schrauben, zum einstecken von Pass- oder Steckstiften oder zur Anbringung anderer Elemente zu nutzen.

Da auch im Bereich der Innenwandungen der Fehlkavität ein Erstarren der Schmelze an der Wandung der Formteilgeometrie bereits während der Füllphase erfolgt, ein Verdrängen von Schmelze jedoch nur aus der Seele der Fehlkavität möglich ist, weist der Druckstempel eine Querschnittsfläche auf, die geringer ist als Querschnittsfläche der Fehlkavität ist, nämlich 95 - 50% der Querschnittsfläche der Fehlkavität. Die Dimensionierung der Querschnittsfläche des Druckstempels im Verhältnis zum Querschnitt der Fehlkavität hängt entscheidend von deren Geometrie ab und wiederum von den Parametern des Spritzprozesses, durch die wesentlich beeinflusst wird, in welchem Bereich der Fehlkavität die Schmelze bereits erstarrt ist und wie groß der Bereich der Seele der Fehlkavität ist, in dem die Schmelze sich noch in einem plastischen - und damit verdrängbaren - Zustand befindet.

Mit dem erfindungsgemäßen Werkzeug ist das Verfahren zur Herstellung von Formteilen gemäß der vorliegenden Erfindung durchzuführen, in dem zunächst ein Schließen des Werkzeugs durch Zusammensetzen der ersten und zweiten Werkzeughälfte zur Herstellung der Formteilkavität sowie einem Ausrücken des Druckstempels aus der Fehlkavität erfolgt, und sodann, bei geschlossenem Werkzeug, das im wesentlichen vollständige Füllen der Formteilkavität und der Fehlkavität durch den Anguss mit Kunststoffschmelze. Nach einer vorgegebenen Zeit t, die vorzugsweise durch Simulationen des Spritzgussprozesses ermittelt wurde, erfolgt dann noch vor dem Erstarren der Schmelze in der Seele des Formteils und der Fehlkavität bei geschlossenem Werkzeug das vorschieben des Druckstempels in die Fehlkavität zur Verdrängung von Schmelze aus der Fehlkavität in die Formteilkavität. Hiernach erfolgt das im wesentlichen vollständige Erstarren lassen der Schmelze im geschlossenen Werkzeug und danach das öffnen des Werkzeugs zur Entformung des Formteils.

Das erfindungsgemäße Verfahren zur Verbesserung der Festigkeit von Bindenähten eignet sich insbesondere bei der Verwendung von faserbefüllten Kunststoffschmelzen, wenn also die Schmelze Fasern zur Armierung des Formteilbildenden Materials enthält. Durch das erfindungsgemäße Verfahren erfolgt bei der Materialdurchmischung im Bereich der Bindenaht nämlich eine Umorientierung der Fasern aus der Richtung parallel zur Bindenaht in andere, zum Teil senkrecht zur Bindenaht orientierter Richtungen, wodurch eine nicht-orientierte, in alle Richtungen gleichmäßigere Wirkung der Armierungsfunktion der Fasern im Formteil resultiert und damit eine deutliche Verbesserung der Festigkeit der Bindenaht.

Die vorliegende Erfindung wird nun anhand der Zeichnung weiter beschrieben, wobei die Zeichnungen lediglich schematisch beispielhafte Ausführungsformen der Erfindung zeigen und der weiteren Erläuterung der erfindungsgemäßen Merkmale und Wirkungsweisen dienen. Es zeigt:
- Fig. 1a-f: die Füllphasen einer Formteilkavität im Spritzguss gemäß dem Stand der Technik;
- Fig. 2a-b: Ansichten eines Formteils, welches unter Verwendung eines erfindungsgemäßen Werkzeugs mit einem Verfahren der vorliegenden Erfindung hergestellt wurde;
- Fig. 3a-b: die Füllphase einer Formteilkavität im Spritzguss gemäß der vorliegenden Erfindung;
- Fig. 3c: die gefüllte Formteilkavität gemäß Fig. 3b nach Einfahren des Druckstempels;
- Fig. 4a-b: Verfahrensschritte des erfindungsgemäßen Verfahrens korrespondierend zu den Figs. 3b und 3c;
- Fig. 5: Faserorientierungen bei der Verwendung von faserbefüllten Kunststoffen für die Verfahrensschritte korrespondierend zu den Figs. 3b und 3c;
- Fig. 6: ein erfindungsgemäßes Spritzgusswerkzeug.

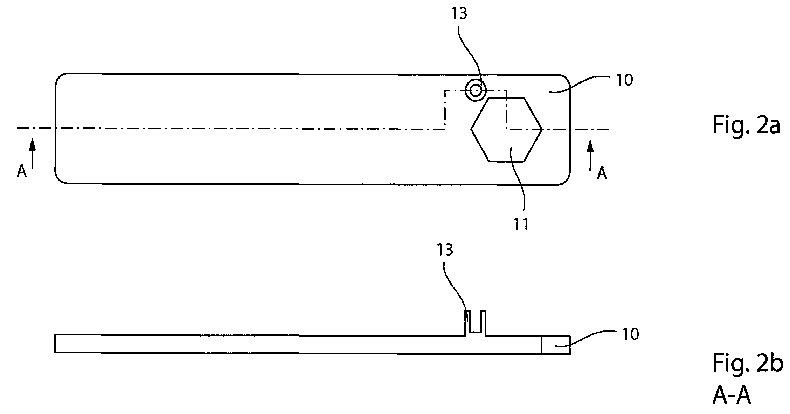

Fig. 2 zeigt ein Formteil 10 mit einer ähnlichen Funktionsgeometrie, wie das mit dem Prozess gemäß Fig. 1 hergestellte Formteil. Die Fig. 1 wurde bereits im Rahmen der allgemeinen Beschreibungseinleitung näher erläutert weshalb hier zur Vermeidung von Wiederholungen auf eine weitergehende Beschreibung der Fig. 1 verzichtet wird. Fig. 2a zeigt das Formteil 10 in einer schematischen Draufsicht; Fig. 2b hingegen zeigt das Formteil in einer schematischen Schnittansicht entlang der Schnittlinie A-A der Fig. 2a.

Das Formteil 10 weist eine Durchführung 11 auf und einen Fehlkörper 13, der sich mit seiner Höhenrichtung im Wesentlichen in Dickenrichtung von der Oberfläche des Formteils weg erstreckt. Der Fehlkörper 13 ist kreiszylinderförmig ausgeführt mit einer innenliegenden Vertiefung, die sich bis in die Nähe der gedachten bzw. fortgeführten Dicke des Formteils im Bereich des Fehlkörpers hinein erstreckt, also nahezu die vollständige Höhe des Fehlkörpers in form einer Vertiefung aufweist. Der Fehlkörper 13 weist hier also eine im wesentlichen Röhrenförmige Geometrie auf.

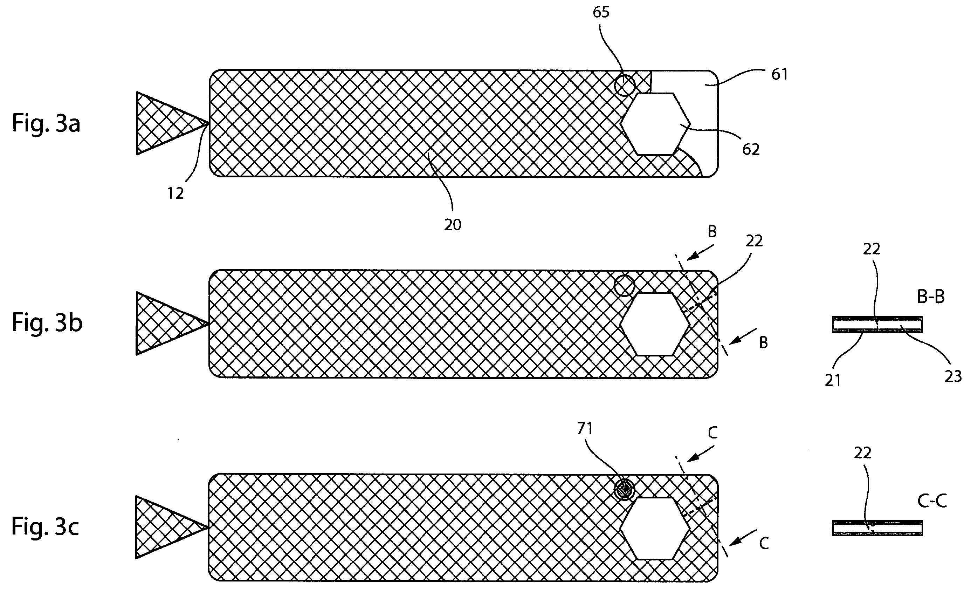

Fig. 3 zeigt den Vorgang der Herstellung eines Formteils gemäß Fig. 2. Dabei zeigt Fig. 3a die Füllphase der Formteilkavität 61 im Werkzeug mit Schmelze 20 durch den Anguss 12 analog zur Fig. 1. Abweichend von der Fig. 1 ist allerdings auch die Fehlkavität 65 erkennbar, die während der Füllphase ebenfalls gleichmäßig mit Schmelze 20 befüllt wird. Durch das zusätzliche mit Schmelze 20 zu befüllende Volumen der Fehlkavität 65 ist die Ausbreitung der Flussfront oberhalb des Kerns 62 allerdings verzögert gegenüber der Flussfront unterhalb des Kerns.

In Fig. 3b ist wiederum der Zustand nach Abschluss der Füllphase gezeigt, wobei hier auch die Bindenaht 22 angedeutet ist, die, anders als im Falle der volumengeometrisch im wesentlichen symmetrischen Formteilkavität 61 der Fig. 1, von der Symmetrieachse abweichend angeordnet ist, da, wie bereits zuvor erläutert, der Schmelzefluss oberhalb der Kerns 62 aufgrund des zusätzlich zu befüllenden Volumens der Fehlkavität 65 nachhinkte. An dieser Stelle sei erwähnt, dass die Platzierung der Fehlkavität 65 an der in Fig. 3 gezeigten Stelle lediglich beispielhaft gewählt ist und andere Platzierungen, beispielsweise rechts vom Kern, also an der Seite des Kerns, die dem Anguss abgewandt ist ebenso möglich ist und gegebenenfalls sogar bevorzugt wäre.

Fig. 3b zeigt zudem eine schematische Schnittansicht B-B auf des Formteil entlang der Linie B-B in der zum einen die sich durch die gesamte Dicke des Formteils hindurch erstreckende Bindenaht 22 erkennbar ist, und zudem sowohl die noch nicht erstarrte Seele 23 des Formteils in dem das Schmelzematerial noch plastisch ist als auch die Randbereiche des Formteils 21 in dem die Schmelze bereits während oder kurz nach Abschluss der Füllphase erstarrt ist. In dem in Fig. 3b gezeigten Zustand ist also eine Schmelzematerialverschiebung innerhalb der Seele des Formteils noch möglich, da sich das Material hier noch in einem viskosen Zustand befindet.

Zu diesem Zeitpunkt erfolgt dann das in Fig. 3c gezeigte Einfahren des Druckstempels 71 in die Fehlkavität 65 hinein, was vorliegend sowohl parallel als auch konzentrisch zur Fehlkavität 65 statt findet Das Einfahren des Druckstempels 71 führt dann zu der gewünschten Schmelzematerialverschiebung innerhalb der noch plastischen Seele 23 des Formteils 61 was, wie die schematische Schnittansicht C-C zeigt, zu einer inneren Verschiebung der Schmelze und damit zu einer Durchmischung des Schmelzematerials im Bereich der Bindenaht 22 führt. Durch die Durchmischung der Schmelze im Bereich der Bindenaht 22 kommt es zu einer verbesserten Verzahnung des Materials, wodurch der erfindungsgemäße Effekt der Bindenahtverstärkung resultiert.

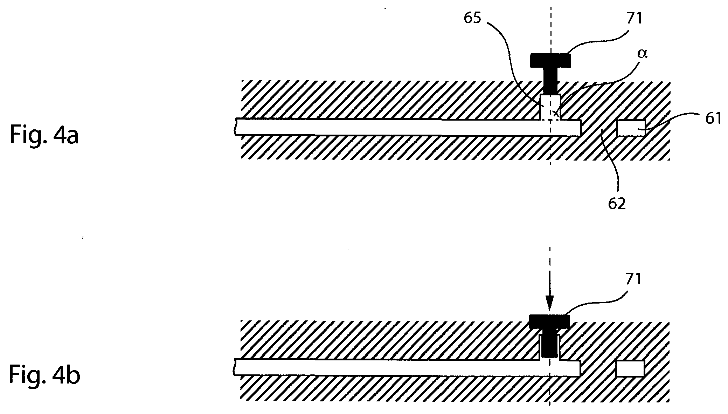

Fig. 4 zeigt in einer weiteren schematischen Darstellung den Vorgang des Einfahrens des Druckstempels 71 in die Fehlkavität 65, wobei die in Fig. 4 gewählte Darstellung das geschlossene Werkzeug entlang einer zur Schnittlinie B-B der Fig. 2a korrespondierenden Schnittlinie zeigt. In Fig. 4a ist erkennbar, dass die Höhe des allgemeinen Zylinders der Fehlkavität im wesentlichen senkrecht (also α ≈ 90°) auf dem gedachten, sich fortsetzenden Oberflächenverlauf der Formteilkavität 61 steht und der Druckstempel 71 entlang der Höhe der Fehlkavität 65 in diese hinein vorgeschoben wird (vgl. Pfeil in Fig. 4b).

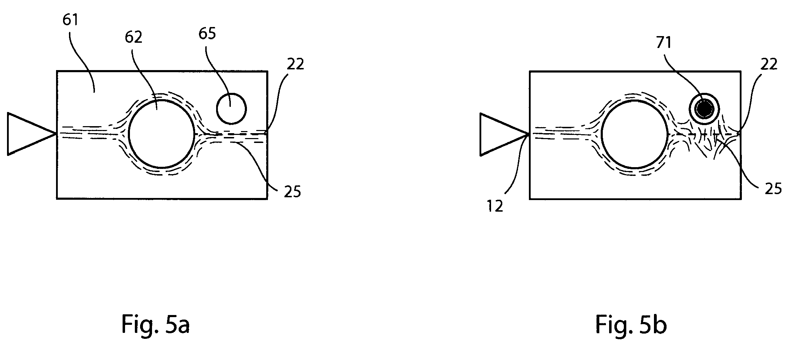

Fig. 5 zeigt in einer weiteren schematischen Darstellung und in den wesentlichen Bereichen eines Formteils bzw. der korrespondierenden Formteilkavität 61 die Orientierung von Fasern bei der Verwendung von Faserbefülltem Kunststoff im Spritzprozess und zwar kurz nach der Füllphase (Fig. 5a) sowie nach dem erfindungsgemäßen Einfahren des Druckstempels 71 (Fig. 5b). Zur Verdeutlichung der Faserorientierung sind hier gestrichelte Linien 25 gezeigt, die die Hauptorientierungsrichtung der Fasern verdeutlichen sollen; die Linien 25 kennzeichnen nicht die Fasern selbst.

In Fig. 5a ist deutlich erkennbar, dass die sich in dem zum Anguss 12 bezüglich des Kerns 62 gegenüberliegenden Bereich bildende Faserstruktur, welche auch im Bereich der Bindenaht 22 liegt im wesentlichen parallel zum Verlauf der Bindenaht 22 erstreckt. Hierdurch erfolgt keine oder nur eine sehr geringe Durchmischung des Schmelzematerials (und dessen Faserbefüllung) über die Grenzen der Bindenaht 22 hinweg. Durch das in Fig. 5b schematisch gezeigte Einfahren des Druckstempels 71 kommt es zu einer Verdrängung der Schmelze innerhalb der Seele des Formteils und damit auch zu einer Umorientierung der Fasern, die in den Bereichen, in denen besonders viel Schmelze über die Nahtgrenzen hinweg verdrängt wird auch besonders ausgeprägt ist. Mitunter entstehen Bereiche der Bindenaht 22, in denen eine Faserorientierung Quer zur Nahtrichtung entsteht und damit auch eine besonders starke Verzahnung/Armierung des Materials in diesem Bereich und daraus resultierend eine Hohe Festigkeit der Bindenaht 22. In Fig. 5b ist daher gut zu erkennen, dass die Orientierung der Fasern 25 nichtmehr im wesentlichen parallel zur Bindenaht 22 verläuft, wie dies in Fig. 5a der Fall ist - und bei einem Spritzprozess gemäß dem Stand der Technik auch bleiben würde - sondern vielmehr verschiedene Richtungen einnimmt, die insbesondere auch Quer zur Bindenaht 22 angeordnet sind und darüber hinaus auch weniger homogen sind, als dies vor dem Einfahren des Druckstempels der Fall war.

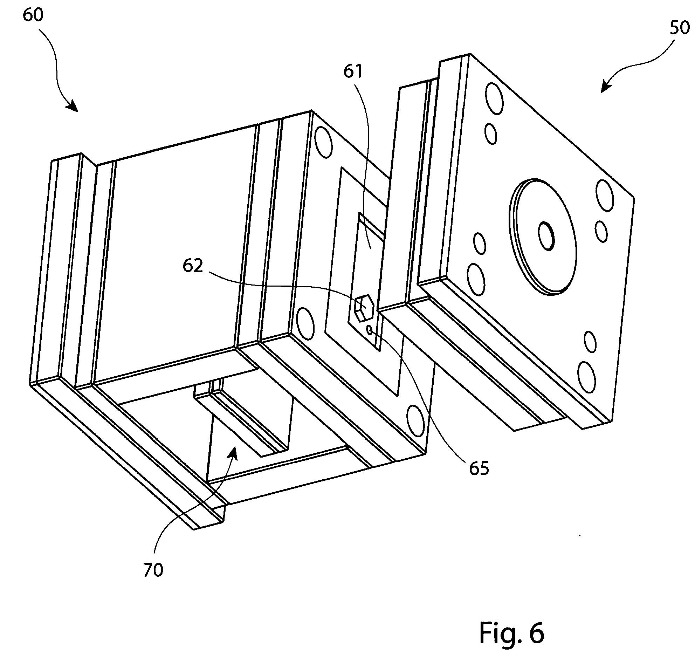

Fig. 6 zeigt schematisch ein Spritzgusswerkzeug gemäß der vorliegenden Erfindung mit einer ersten, Düsenseitigen Werkzeughälfte 50 und einer zweiten, aufspannseitigen Werkzeughälfte 60. Im aufspannseitigen Teil des Werkzeugs ist ein Bereich vorgesehen, der mit der düsenseitigen Werkzeughälfte 50 korrespondierend eine Formteilkavität 61 bildest mit einem Kern 62 und einer in der Nähe des Kerns 62 in die Formteilkavität mündenden Fehlkavität 65. Zum Spritzprozess werden die beiden Werkzeughälften 50, 60 aneinander gefahren, um das Werkzeug zu schließen. Es ist außerdem ein Aggregat 70 gezeigt, welches dem Antrieb des in Fig. 6 nicht erkennbaren Druckstempels 71 dient und diesen bei geschlossenem Werkzeug in die Fehlkavität vorzugsweise in Schließrichtung des Werkzeugs ein- und Ausfahren kann.

## Patentansprüche

1. Werkzeug zur Herstellung von Formteilen (10) mit wenigstens einer Durchführung (11), aufweisend:
wenigstens eine erste und eine korrespondierende zweite Werkzeughälfte (50, 60), welche im zusammengesetzten Zustand eine innenliegende Formteilkavität (61) definieren zur Herstellung eines Formteils in einem Gussverfahren, vorzugsweise einem Spritzgussverfahren, wobei innerhalb der Formteilkavität (61) wenigstens ein Kern (62) angeordnet ist, welcher die wenigstens eine Durchführung (11) des Formteils (10) definiert;
wenigstens einen Anguss (12) für die Formteilkavität (61);
wenigstens eine mit der Formteilkavität (62) flussverbundene Fehlkavität (65), wobei die Fehlkavität (65) in der Nähe des Kerns (62) angeordnet ist; und
wenigstens einen durch ein Vorschubaggregat (70) linearverschieblichen Druckstempel (71),
wobei die Fehlkavität (65) eine allgemein zylindrische Geometrie aufweist mit einer über die Höhe des Zylinders im wesentlichen gleich bleibenden Querschnittsfläche, die sich bis in die Formteilkavität (61) hinein erstreckt, und wobei die Längsachse der Fehlkavität (65) unter einem vorgegebenen Winkel α zur Oberfläche der Formteilkavität (61) angeordnet ist,
die Verschiebungslinie des Druckstempels (71) im wesentlichen parallel und bevorzugt konzentrisch zur Längsachse der Fehlkavität (65) verläuft, so dass ein Vorschub des Druckstempels (71) zu einer Reduzierung des freien Volumens der Fehlkavität (65) führt,
**dadurch gekennzeichnet, dass**
der Druckstempel (71) eine Querschnittsfläche aufweist, die 95 - 50% der Querschnittsfläche der Fehlkavität (65) ist.

2. Werkzeug gemäß Anspruch 1, **dadurch gekennzeichnet, dass** die Fehlkavität(65) an einem Bereich der Formteilkavität (61) angeordnet ist, welcher, mit Bezug auf den Kern (62), zu wenigstens einem Anguss abgewandt ist.

3. Werkzeug gemäß Anspruch 1 oder 2, **dadurch gekennzeichnet, dass** gilt 70° <α< 80°, vorzugsweise 80° < α < 85°, bevorzugt 85° <α< 90° und besonders bevorzugt α ≈ 90°.

4. Werkzeug gemäß einem der vorhergehenden Ansprüche, **dadurch gekennzeichnet, dass** der Vorschub des Druckstempels geringer oder maximal gleich der Höhe des Zylinders der Fehlkavität (65) ist, vorzugsweise 50 - 70% der Höhe des Zylinders der Fehlkavität (65) ist, weiter vorzugsweise 70 - 90% der Höhe des Zylinders der Fehlkavität (65) ist, bevorzugt 90 - 95% der Höhe des Zylinders der Fehlkavität (65) ist, und besonders bevorzugt 95 - 100% der Höhe des Zylinders der Fehlkavität (65) ist.

5. Werkzeug gemäß einem der vorhergehenden Ansprüche, **dadurch gekennzeichnet, dass** der Querschnitt der Fehlkavität (65) größer oder gleich der lokalen Dicke der Formteilkavität (61) im Bereich der Fehlkavität (65) ist, vorzugsweise das 8 bis 10-Fache der lokalen Dicke der Formteilkavität (61) im Bereich der Fehlkavität (65) ist, weiter vorzugsweise das 5 bis 8-Fache der lokalen Dicke der Formteilkavität (61) im Bereich der Fehlkavität (65) ist, weiter vorzugsweise das 3 bis 5-Fache der lokalen Dicke der Formteilkavität (61) im Bereich der Fehlkavität (65) ist, und weiter vorzugsweise wenigstens das 1 bis 3-Fache der Dicke der Formteilkavität (61) im Bereich der Fehlkavität (65) ist.

6. Werkzeug gemäß einem der vorhergehenden Ansprüche, **dadurch gekennzeichnet, dass** der Druckstempel (71) eine allgemein zylindrische oder kegelstumpfförmige Geometrie aufweist.

7. Werkzeug gemäß Anspruch 6, **dadurch gekennzeichnet, dass** der Druckstempel (71) wenigstens einen stufenförmigen Absatz aufweist, an welchem sich die Querschnittsfläche des Druckstempels (71) im wesentlichen unstetig verringert.

8. Verfahren zur Herstellung von Formteilen (10) mit wenigstens einer Durchführung (11) mit einem Werkzeug gemäß einem der Ansprüche 1 bis 7, aufweisend die Schritte:
a. Schließen des Werkzeugs durch Zusammensetzen der ersten und zweiten Werkzeughälfte (50,60) zur Herstellung der Formteilkavität (61) und Ausrücken des Druckstempels (71) aus der Fehlkavität (65);
b. bei geschlossenem Werkzeug, im wesentlichen vollständiges Füllen der Formteilkavität (61) und der Fehlkavität (65) durch den Anguss (12) mit Schmelze (20), vorzugweise Kunststoffschmelze;
c. vor Erstarrung der Schmelze in der Seele des Formteils (10) und der Fehlkavität (65), bei geschlossenem Werkzeug, Vorschieben des Druckstempels (71) in die Fehlkavität (65) zur Verdrängung von Schmelze aus der Fehlkavität (65) in die Formteilkavität (61);
d. bei geschlossenem Werkzeug, Erstarren lassen der Schmelze;
e. Öffnen des Werkzeugs durch Lösen der Werkzeughälften (50,60) voneinander und entformen des Formteils (10).

9. Verfahren zur Herstellung von Formteilen (10) gemäß Anspruch 8, **dadurch gekennzeichnet, dass** die Schmelze Fasern zur Armierung des formteilbildenden Materials enthält.

10. Verfahren zur Herstellung von Formteilen (10) gemäß Anspruch 8 oder 9, **dadurch gekennzeichnet, dass** das Werkzeug ein Spritzgusswerkzeug ist und das Füllen der Formteilkavität im Spritzguss erfolgt.

11. Verwendung eines Werkzeugs gemäß einem der Ansprüche 1 bis 7 zur Herstellung von Formteilen (10) mit faserbefülltem Kunststoff im Spritzguss.

## Claims

1. A tool for manufacturing molded parts (10) with at least one aperture (11), the tool comprising:
at least a first and a corresponding second tool half (50,60), which in the assembled state define an interior mold part cavity (61) for manufacturing a molded part in a molding process, preferably an injection molding process, there being arranged within the mold part cavity (61) at least one core (62) which defines the at least one aperture (11) of the molded part (10);
at least one sprue (12) for the mold part cavity (61);
at least one defect cavity (65) which is flow-connected to the mold part cavity (62), the defect cavity (65) being arranged near the core (62); and
at least one plunger (71) which is linearly slidable by a feed device (70),
the defect cavity (65) having a generally cylindrical geometry with a cross-sectional area that, over the height of the cylinder, remains substantially constant, which extends into the mold part cavity (61), and the longitudinal axis of the defect cavity (65) being arranged at a predetermined angle α with the surface of the mold part cavity (61),
the displacement line of the plunger (71) being substantially parallel and preferably concentric with the longitudinal axis of the defect cavity (65), so that advancement of the plunger (71) causes a reduction of the free volume of the defect cavity (65),
**characterized in that**
the plunger (71) has a cross-sectional area which is 95 - 50% of the cross-sectional area of the defect cavity (65).

2. The tool according to claim 1, **characterized in that** the defect cavity (65) is arranged at a region of the mold part cavity (61) which, relative to the core (62), faces away towards at least one sprue.

3. The tool according to claim 1 or 2, **characterized in that** 70° < α < 80°, preferably 80°< α < 85°, preferably 85° < α <90° and particularly α-90°.

4. The tool according to any of the preceding claims, **characterized in that** the advancement of the plunger is less than, or at most equal to, the height of the cylinder of the defect cavity (65), preferably 50 - 70% of the height of the cylinder of the defect cavity (65), further preferably 70 - 90% of the height of the cylinder of the defect cavity (65), preferably 90 - 95% of the height of the cylinder of the defect cavity (65), and particularly preferably 95 - 100% of the height of the cylinder of the defect cavity (65).

5. The tool according to any of the preceding claims, **characterized in that** the cross section of the defect cavity (65) is larger than or equal to the local thickness of the mold part cavity (61) in the region of the defect cavity (65), preferably 8 to 10 times the local thickness of the mold part cavity (61) in the region of the defect cavity (65), further preferably 5 to 8 times the local thickness of the mold part cavity (61) in the region of the defect cavity (65), further preferably 3 to 5 times the local thickness of the mold part cavity (61) In the region of the defect cavity (65), and further preferably at least 1 to 3 times the thickness of the mold part cavity (61) in the region of the defect cavity (65).

6. The tool according to any of the preceding claims, **characterized In that** the plunger (71) has a generally cylindrical or truncated-cone shaped geometry.

7. The tool according to claim 6, **characterized in that** the plunger (71) has at least one step-shaped shoulder where the cross-sectional area of the plunger (71) decreases substantially discontinuously.

8. A method for manufacturing molded parts (10) with at least one aperture (11) using a tool according to any of claims 1 to 7, the method including the steps of:
a. closing the tool by joining together the first and second tool halves (50, 60) to create the mold part cavity (61), and with drawing the plunger (71) from the defect cavity (65);
b. with the tool closed, filling the mold part cavity (61) and the defect cavity (65) substantially completely with melt (20), preferably plastic melt, through the sprue (12);
c. with the tool closed, before solidification of the melt in the center of the molded part (10) and of the defect cavity (65), advancing the plunger (71) into the defect cavity (65) to force melt from the defect cavity (65) into the mold part cavity (61);
d. with the tool closed, allowing the melt to solidify;
e. opening the tool by releasing the toot halves (50, 60) from each other, and removing the molded part (10).

9. The method for manufacturing molded parts (10) according to claim 8, **characterized in that** the melt contains fibers to reinforce the material forming the molded part.

10. The method for manufacturing molded parts (10) according to claims 8 or 9, **characterized in that** the tool is an injection-molding tool and the filling of the mold part cavity is carried out using injection molding.

11. The use af a tool according to any of claims 1 to 7 for manufacturing molded parts (10) from fiber-filled plastics using injection molding.

## Revendications

1. Outil en vue de la fabrication de pièces moulées (10) avec au moins une traversée (11), présentant :
au moins une première et une seconde moitié d'outil correspondante (50, 60), qui définissent dans l'état assemblé une cavité de pièce moulée située à l'intérieur (61) en vue de la fabrication d'une pièce moulée dans un procédé de coulage, de préférence un procédé de moulage par injection, au moins un noyau (62) étant disposé à l'intérieur de la cavité de pièce moulée (61), qui définit au moins l'une des traversées (11) de la pièce moulée (10) ;
au moins une carotte (12) pour la cavité de pièce moulée (61) ;
au moins une cavité par défaut (65) reliée par écoulement avec la cavité de pièce moulée (62), la cavité par défaut (65) étant disposée à proximité du noyau (62) ; et
au moins un tampon de pression (71) mobile linéairement par une unité d'avance (70),
la cavité par défaut (65) présentant une géométrie cylindrique générale avec une superficie de section demeurant pour l'essentiel constante au-dessus de la hauteur du cylindre, qui s'étend jusqu'à l'intérieur de la cavité de pièce moulée (61), et l'axe longitudinal de la cavité par défaut (65) étant agencé sous un angle prescrit α par rapport à la surface de la cavité de pièce moulée (61),
la ligne de déplacement du tampon de pression (71) se déploie pour l'essentiel parallèlement et en favorisant la manière concentrique par rapport à l'axe longitudinal de la cavité par défaut (65), de sorte qu'une avance du tampon de pression (71) entraîne une réduction du volume libre de la cavité par défaut (65),
**caractérisé en ce que**
le tampon de pression (71) présente une superficie de section qui fait de 95 à 50 % de la superficie de section de la cavité par défaut (65).

2. Outil selon la revendication 1, **caractérisée en ce que** la cavité par défaut (65) est agencée contre une zone de la cavité de pièce moulée (61), qui, par rapport au noyau (62), est détournée vers au moins une carotte.

3. Outil selon les revendications 1 ou 2, **caractérisé en ce que** s'applique 70° < α < 80°, de préférence 80° < α < 85°, en favorisant 85° < α < 90° et en favorisant particulièrement α ≈ 90°,

4. Outil selon une quelconque des revendications précédentes, **caractérisé en ce que** l'avance du tampon de pression est inférieure ou au maximum égale à la hauteur du cylindre de la cavité par défaut (65), **en ce qu'**elle fait de préférence 50 à 70 % de la hauteur du cylindre de la cavité par défaut (65), **en ce qu'**elle fait de manière favorisée par ailleurs 70 à 90 % de la hauteur du cylindre de la cavité par défaut (65), **en ce qu'**elle fait de manière favorisée 90 à 95 % de la hauteur du cylindre de la cavité par défaut (65), et **en ce qu'**elle fait de manière particulièrement favorisée 95 à 100 % de la hauteur du cylindre de la cavité par défaut (65).

5. Outil selon une quelconque des revendications précédentes, **caractérisé en ce que** la section de la cavité par défaut (65) est supérieure ou égale à l'épaisseur locale de la cavité de pièce moulée (61) dans la zone de la cavité par défaut (65), **en ce qu'**elle fait de préférence 8 à 10 fois l'épaisseur locale de la cavité de pièce moulée (61) dans la zone de la cavité par défaut (65), et **en ce qu'**elle fait par ailleurs de préférence 5 à 8 fois l'épaisseur locale de la cavité de pièce moulée (61) dans la zone de la cavité par défaut (65), **en ce qu'**elle fait par ailleurs de préférence 3 à 5 fois l'épaisseur locale de la cavité de pièce moulée (61) dans la zone de la cavité par défaut (65), et **en ce qu'**elle fait par ailleurs de préférence au moins 1 à 3 fois l'épaisseur de la cavité de pièce moulée (61) dans la zone de la cavité par défaut (65).

6. Outil selon une quelconque des revendications précédentes, **caractérisé en ce que** le tampon de pression (71) présente une géométrie généralement cylindrique ou tronconique.

7. Outil selon la revendication 6, **caractérisé en ce que** le tampon de pression (71) présente au moins un gradin à échelons, sur lequel la superficie de la section du tampon de pression (71) se réduit pour l'essentiel de manière variable.

8. Procédé en vue de la fabrication de pièces moulées (10) avec au moins une traversée (11) avec un outil selon une quelconque des revendications 1 à 7, présentant les étapes de :
a. Fermeture de l'outil par l'assemblage de la première et de la seconde moitié d'outil (50, 60) en vue de la fabrication de la cavité de pièce moulée (61) et sortie du tampon de pression (71) hors de la cavité par défaut (65) ;
b. Chargement complet en cas d'outil fermé pour l'essentiel de la cavité de pièce moulée (61) et de la cavité par défaut (65) à travers la carotte (12) avec de la masse fondue (20), de préférence de la masse fondue de plastique ;
c. Avant la solidification de la masse fondue dans l'âme de la pièce moulée (10) et de la cavité par défaut (65), en cas d'outil fermé, avance du tampon de pression (71) dans la cavité par défaut (65) en vue du refoulement de masse fondue hors de la cavité par défaut (65) dans la cavité de pièce moulée (61) ;
d. En cas d'outil fermé, autorisation de solidification de la masse fondue ;
e. Ouverture de l'outil par détachement des moitiés d'outil (50, 60) l'une de l'autre et démoulage de la pièce moulée (10).

9. Procédé en vue de la fabrication de pièces moulées (10) selon la revendication 8, **caractérisé en ce que** la masse fondue contient des fibres en vue du blindage du matériau constituant la pièce moulée.

10. Procédé en vue de la fabrication de pièces moulées (10) selon la revendication 8 ou 9, **caractérisé en ce que** l'outil est un outil de moulage par injection et **en ce que** le chargement de la cavité de pièce moulée est réalisée en moulage par injection.

11. Utilisation d'un outil selon une quelconque des revendications 1 à 7 en vue de la fabrication de pièces moulées (10) avec du plastique chargé de fibres en moulage par injection.
